# EUROPÄISCHE PATENTSCHRIFT

(11) **EP 0 728 084 B1**
(45) Veröffentlichungstag und Bekanntmachung des Hinweises auf die Patenterteilung: **02.06.1999**
(21) Anmeldenummer: 94924839.7
(22) Anmeldetag: 03.08.1994
(51) Int. Cl.: B60S 1/34, B60S 1/58

(54) **FÜHRUNGSVORRICHTUNG FÜR EINE ANTRIEBSWELLE UND VERFAHREN ZUR MONTAGE EINES MOTORS MIT EINER ANTRIEBSWELLE IN EINEM FAHRZEUG**
DRIVE SHAFT GUIDING DEVICE AND PROCESS FOR MOUNTING A MOTOR WITH A DRIVE SHAFT INTO A VEHICLE
DISPOSITIF DE GUIDAGE D'UN ARBRE DE COMMANDE ET PROCEDE DE MONTAGE D'UN MOTEUR AVEC SON ARBRE DE COMMANDE SUR UN VEHICULE

(43) Veröffentlichungstag der Anmeldung: 28.08.1996
(73) Patentinhaber: ITT Automotive Europe GmbH, 60488 Frankfurt (DE)
(72) Erfinder: RIENHARDT, Hans-Peter, D-74172 Neckarsulm (DE); WALTHER, Bernd, D-74321 Bietigheim-Bissingen (DE)
(74) Vertreter: Dreiss, Fuhlendorf, Steimle & Becker
(86) Internationale Anmeldenummer: EP9402571
(87) Internationale Veröffentlichungsnummer: WO9604156

(56) Entgegenhaltungen:
- DE-U- 8 808 674
- FR-A- 2 320 850
- GB-A- 2 091 545
- US-A- 3 241 892
- US-A- 5 211 485
- PATENT ABSTRACTS OF JAPAN vol. 004 no. 125 (M-030) ,3.September 1980 & JP,A,55 083643 (SUZUKI MOTOR CO LTD) 24.Juni 1980,
- PATENT ABSTRACTS OF JAPAN vol. 009 no. 168 (M-396) ,13.Juli 1985 & JP,A,60 042142 (NISSAN JIDOSHA KK) 6.März 1985,

## Beschreibung

Die Erfindung bezieht sich auf eine Führungsvorrichtung, die dazu dient, eine Antriebswelle, die insbesondere zum Antrieb eines Scheibenwischerarms vorgesehen ist, wasserdicht durch die Fensterscheibe, insbesondere eine Rückscheibe eines Fahrzeuges zu führen.

Sie bezieht sich weiterhin auf ein Verfahren zur Montage eines Motors mit einer derartigen Antriebswelle im Fahrzeug.

Die Erfindung geht aus von der folgenden Problemstellung.

Der Wischermotor für die Wischanlage einer Pkw-Rückscheibe wird üblicherweise an der Heckklappe unterhalb der Scheibe befestigt. Die Antriebswelle des Motors ragt durch ein Loch im Karosserieblech nach außen. An ihr wird der Scheibenwischerarm befestigt. Die Antriebswelle bildet die Schwenkachse für den Scheibenwischer. Da die Schwenkachse unterhalb der Scheibe liegt, ist der Wischwinkel deutlich kleiner als 180°. Dies hat zur Folge, daß am unteren Rand der Scheibe links und rechts von der Mitte jeweils ein keilförmiger Bereich entsteht, der nicht gewischt wird. Um dies zu verhindern, wurde schon vorgeschlagen, den Motor an der Scheibe selbst zu befestigen und die Antriebswelle durch ein Loch in der Scheibe hindurchzuführen. Die Schwenkachse des Scheibenwischers liegt somit in der Scheibenfläche, so daß der Wischwinkel 180° betragen kann. Damit werden größere Flächen der Scheibe vom Wischer erfaßt als bei der vorher beschriebenen Anordnung.

Die Befestigung des Motorgehäuses an der Scheibe ist nicht unproblematisch. Die Fahrzeugscheibe ist, insbesondere dann wenn sie gekrümmt ist, nicht frei von Spannungen. Diese treten verstärkt im Bereich des Durchgangsloches auf. Wird nun das Motorgehäuse zum Beispiel mittels einer Schraubverbindung an der Scheibe befestigt, so können die Anschraubkräfte, die notwendig sind, um den Motor zu halten, dazu führen, daß die Scheibe zerplatzt. Die Beschädigung der Scheibe kann aber auch erst im Betrieb auftreten. Die Erschütterungen, denen der Motor im Fahrbetrieb ausgesetzt ist, werden auf die Scheibe übertragen und müssen von ihr abgefangen werden. Hierzu ist die Scheibe nur im begrenzten Umfang in der Lage.

Besonders groß werden die Kräfte, wenn die Rückklappe des Fahrzeuges heftig zugeschlagen wird. Die Trägheitskräfte des Motors reißen an der Scheibe und können zu ihrer Beschädigung führen.

Aus der GB-OS 2 091 545 ist ein Scheibenwischer bekannt, bei dem die Antriebswelle durch die Scheibe geführt ist. Die Antriebswelle ist dabei in einem Gleitlager geführt, welches wiederum innerhalb einer Kunststoffmuffe gelagert ist. Die Kunststoffmuffe selbst ragt durch einen Dichtring durch die Scheibe, welcher die Außenfläche der Scheibe gegenüber deren Innenfläche abdichtet. Die Muffe dient gleichzeitig dazu, einen hinter der Scheibe liegenden Flüssigkeitsbehälter mit einer vor der Scheibe liegenden Spritzdüse zu verbinden. Die bekannte Konstruktion ist nicht besonders tragfähig und besitzt radial zur Wellenlängsachse eine nur kleine Toleranz.

Die Erfindung geht daher aus von einer Vorrichtung der sich aus dem Oberbegriff des Anspruchs 1 ergebenden Gattung.

Es ist somit eine Aufgabe der Erfindung, die Durchführung der Antriebsachse durch die Fahrzeugscheibe möglichst kräftefrei zu gestalten.

Bei der Erfüllung dieser Aufgabe muß natürlich darauf geachtet werden, daß die Dichtung der Durchführung so erfolgt, daß kein Regenwasser durch den Durchführungsbereich in den Innenraum des Fahrzeuges gelangen kann.

Eine weitere Aufgabe der Erfindung ist es daher, die Durchführung ausreichend abzudichten.

Bei der Konstruktion der Vorrichtung ist auch darauf zu achten, daß der Motor und die Fahrzeugscheibe leicht zu montieren sind.

Es ist daher Aufgabe der Erfindung, ein Verfahren zu schaffen, bei der die Montage von Motor und Scheibe schnell erfolgen kann, ohne daß dabei Beschädigungen insbesondere der Scheibe auftreten.

Die Aufgabe wird bei der gattungsgemäßen Vorrichtung durch die sich aus dem kennzeichnenden Teil des Anspruchs 1 ergebende Merkmalskombination gelöst. Die Erfindung besteht im Prinzip also darin, sowohl ein axiales Spiel der Gleithülse und damit des Motorgehäuses gegenüber der Scheibe bzw. der Führungshülse zuzulassen. Weiterhin wird durch den radial nach außen weisenden Flansch der Führungshülse ein radialer Toleranzausgleich der Führungshülse gegenüber der Scheibe ermöglicht.

Damit die Führungshülse an der Fahrzeugscheibe befestigt werden kann, besitzt sie einen Flansch, der sich radial nach außen erstreckt und sich im montierten Zustand zwischen dem Gehäuse und der Scheibe befindet. Auf der anderen Seite der Scheibe also außen befindet sich eine Befestigungseinheit, die mit der Führungshülse verbindbar ist. Die Befestigungseinheit kann in unterschiedlichster Weise an der Führungshülse befestigt werden. In jedem Fall wird die Fahrzeugscheibe zwischen dem Flansch und einem Befestigungselement eingeklemmt.

Das Befestigungselement kann zum Beispiel mit der Führungshülse verschraubt werden. Vorzugsweise weist das Befestigungselement ein sich radial nach innen erstreckenden umlaufenden Vorsprung auf, der in eine an der Außenfläche der Führungshülse verlaufenden Nut eingreift. Ein solches Befestigungselement braucht lediglich auf die Hülse aufgeschoben zu werden, bis der Vorsprung in die Nut einrastet. Dies geht schneller, als wenn eine Mutter aufgeschraubt werden muß. Eine besonders einfache Form eines Befestigungselementes mit einem Rastvorsprung ergibt sich, wenn das Befestigungselement als Ring ausgebildet ist, der im Schnitt U-förmig ist. An dem oberen Ende des Innenschenkels ist der Vorsprung angeformt. Die Stirnfläche des äußeren Schenkels liegt im montierten Zustand an der Fahrzeugscheibe an.

Eine derartige Ausbildung des Befestigungselements hat den Vorteil, daß der Innenschenkel elastisch nachgeben kann, damit der Vorsprung zurückgedrückt werden kann, wenn sich der Vorsprung beim Aufsetzen des Befestigungselementes auf die Führungshülse noch nicht im Bereich der Rastnut befindet. Das Befestigungselement liegt nicht großflächig an der Fahrzeugscheibe an, sondern nur im Bereich der schmalen Oberkante des äußeren umlaufenden Schenkels. Die Kontaktierungsfläche des Befestigungselementes mit der Scheibe ist ringförmig. Durch die kleine Aufsetzfläche kann die Kraftübertragung nahezu spannungsfrei erfolgen. Die Aufsetzfläche kann noch stärker verkleinert werden, wenn auf der Stirnfläche des außen umlaufenden Schenkels ein sich in axialer Richtung erstreckender, im Querschnitt etwa dreieckiger Vorsprung ausgebildet wird.

Um die Welle gegenüber der Vorrichtung abzudichten, gibt es mehrere Möglichkeiten.

Zum einen kann die Führungshülse einen Vorsprung aufweisen, der sich radial nach innen erstreckt und an der Antriebswelle anliegt. Dieser Vorsprung trägt einen Dichtring, der an der Antriebswelle anliegt.

Ein derartiger Vorsprung kann auch an dem Befestigungselement vorgesehen werden. In diesem Fall wird das Befestigungselement aber vorzugsweise als Überwurfmutter ausgebildet, die auf die Führungshülse aufgeschraubt wird.

Eine besonders gute Dichtung wird erreicht, wenn die Gleithülse mit einer innenliegenden und einer außenliegenden Nut versehen wird, die sich jeweils nach oben hin öffnen. Die innenliegende Ringnut erstreckt sich im wesentlichen über die gesamte Länge der Gleithülse. Im unteren Teil befindet sich ein erstes Gleitstück. Im oberen Teil ein zweites Gleitstück, das mit einem nach außen ragenden Vorsprung versehen ist, der sich über die außenliegende Ringnut erstreckt. Zwischen dem ersten Gleitstück und dem zweiten Gleitstück befindet sich ein Luftspalt. Eine Dichtung kann in diesen Luftspalt eingesetzt werden. Sie dichtet die Gleithülse gegen die Antriebswelle. Eine zweite Dichtung wird in die außenliegende Ringnut eingesetzt. Sie dichtet die Gleithülse gegen die Führungshülse.

In diesem Fall benötigt weder die Führungshülse noch das Befestigungselement einen Vorsprung, der sich radial nach innen erstreckt. Als Befestigungselement kann dann eine einfache Mutter vorgesehen werden, die auf die Führungshülse aufgeschraubt wird.

Insbesondere in den Fällen, in denen das Befestigungselement mit einer Rastvorrichtung an der Führungshülse befestigt wird, kann es notwendig werden, die Führungshülse bei der Montage axial nach außen zu ziehen. Dies kann in zweierlei Weise erfolgen. Zum einen mit Hilfe eines Werkzeuges. Dann ist an der Führungshülse eine Kerbe vorzusehen, in die das Werkzeug eingreifen kann. Eine weitere Möglichkeit besteht darin, einen Feder einzusetzen, die koaxial zur Antriebswelle vorgesehen ist, und sich einerseits an der Gleithülse und andererseits an einem Vorsprung der Führungshülse abstützt.

Eine derartige Feder hat den Vorteil, daß kein Werkzeug benötigt wird; desweiteren wird eine Relativbewegung zwischen Führungshülse und Gleithülse elastisch gedämpft.

Um einerseits die auf dieser Scheibe einwirkenden Flächenpressung zu reduzieren und andererseits die Durchführung gegen Regenwasser zu dichten, wird vorgeschlagen, daß eine Gummischeibe zwischen dem Flansch und der Scheibe und/oder zwischen dem Befestigungselement und der Scheibe angeordnet wird. Eine Gummischeibe zwischen dem Flansch und der Scheibe hat den Vorteil, daß diese in der Vormontage mit der Führungshülse verklebt werden kann. Die Gummischeibe zwischen dem Befestigungselement und der Scheibe kann erst bei der Montage der Scheibe eingesetzt werden. Sie kann allerdings dann notwendig werden, wenn als Befestigungselement eine Mutter vorgesehen wird. Sie verhindert, daß zu große Drehmomente, die auf die Mutter ausgeübt werden, zu einer Beschädigung der Scheibe führen.

Vor allen in den Fällen, in denen als Befestigungselement eine Mutter vorgesehen ist, kann zwischen dem Befestigungselement und der Scheibe bzw. dem Gummi eine Zwischenscheibe vorgesehen werden. Dies wird insbesondere dann nötig werden, wenn die Scheibe gekrümmt ist. Dann nämlich können die jeweils unten und oben liegende Fläche der Scheibe einen Winkel gegeneinander aufweisen, der der Krümmung der Scheibe entspricht. Auf diese Weise werden keine unnötigen Kräfte auf die Scheibe übertragen, die zu neuen Spannungen in der Scheibe führen. Wie schon erläutert, wird der Motor an der Karosserie und nicht an der Scheibe befestigt. Vorzugsweise erfolgt die Befestigung in zwei besser aber in drei Punkten, so daß Kippungen und Neigungen des Motors in einer Ebene parallel zur Fensterfläche möglichst ausgeschlossen sind. Dadurch werden keine seitlichen Kräfte auf die Führungshülse ausgeübt. Die Dreipunktanordnung kann aber durchaus eine leichte Bewegung des Motors senkrecht zur Scheibe zulassen. Eine derartige Bewegung führt zu einer Gleitbewegung der Gleithülse in der Führungshülse, die von der Feder, falls sie vorgesehen ist, aufgenommen werden kann. Ruckartige Bewegungen des Motors, wie sie zum Beispiel beim Zuklappen der rückwärtigen Fahrzeugklappe auftreten, werden somit nicht auf die Fahrzeugscheibe übertragen.

Die vorgeschlagene Vorrichtung führt auch zu einer sehr einfachen Montageart mit den folgenden Merkmalen. Zunächst wird die Führungshülse auf die Gleithülse gesetzt. Dann wird der Motor mit der Führungshülse an der Karosserie befestigt. Erst dann wird die Fensterscheibe in den vorgesehenen Rahmen in der Karosserie eingesetzt, wobei die Führungshülse durch ein entsprechendes Loch in der Fahrzeugscheibe hindurchgreift.

Der Durchmesser des Lochs in der Scheibe muß deutlich größer gewählt werden, als der Durchmesser der Führungshülse, um Toleranzen in den Karosserieabmessungen ausgleichen zu können.

Anschließend wird die Führungshülse mittels des Befestigungselementes an der Scheibe befestigt, wobei gegebenenfalls ein Werkzeug benutzt werden muß, wenn die Befestigung mittels einer Rastvorrichtung erfolgt.

Im folgenden wird die Erfindung anhand von 5 Figuren näher erläutert. Die Figuren zeigen verschiedene Ausführungsformen, wobei jeweils ein Halbschnitt dargestellt wird.

Die Elemente der Vorrichtung sind jeweil rotationssymmetrisch, so daß nur die eine Hälfte des Schnitts dargestellt worden ist. Strichpunktiert ist die Rotationsachse, die der Achse der Antriebswelle entspricht, dargestellt. Radial außen ist in der Zeichnung rechts, radial innen in der Zeichnung links. Unten befindet sich jeweils der Fahrzeuginnenraum, oben der Fahrzeugaußenraum. Radiale Richtungen werden daher mit "innen" und "außen", axiale Richtungen mit "oben" und "unten" angegeben.

Mit 1 ist ein Motorgehäuse oder Getriebegehäuse bezeichnet, das hier nur zum Teil gezeigt ist. An dem Motorgehäuse ist eine Gleithülse 2 angeformt, die sich koaxial zur Antriebswelle 3 erstreckt. Die Vorrichtung ist rotationssymmetrisch zur Antriebswelle ausgebildet. Mit 4 ist eine Führungshülse bezeichnet. Die Führungshülse 4 besteht aus einem zylindrischen Grundkörper 4', dessen Innendurchmesser dem Außendurchmesser der Gleithülse 2 entspricht. Die Führungshülse 4 ist mit ihrem Grundkörper 4' auf die Gleithülse 2 aufgeschoben. An ihrem unteren Ende weist die Führungshülse 4 einen sich radial nach außen erstreckenden Flansch 5 auf. Der Flansch verläuft senkrecht zum Grundkörper 4'. An ihrem oberen Ende weist der Grundkörper 4' der Führungshülse 4 einen sich radial nach innen erstreckenden Vorsprung 6 auf, der an der Antriebswelle 3 anliegt. Der Vorsprung 6 weist eine Ringnut 7 auf, die nach unten hin offen ist und dort durch eine Lochscheibe 8 begrenzt ist. In der Ringnut 7 ist eine Dichtung 9 vorgesehen, die dichtend an der Antriebswelle 3 anliegt.

Der Grundkörper 4' der Führungshülse 4 weist an seiner Außenfläche eine umlaufende Rastnut 10 auf, die etwas oberhalb der Fensterscheibe 11 liegt, wenn die Führungshülse an der Fensterscheibe 11 befestigt ist. Eine weitere Nut, nämlich eine Montagenut 12 ist im oberen Bereich des Grundkörpers 4' an der Außenfläche der Führungshülse 4 vorgesehen. Sie dient dem Eingriff eines Werkzeugs 13.

Das Befestigungselement besteht gemäß diesem Ausführungsbeispiel aus einem im Schnitt U-förmigen Ring 14. Die Grundfläche des Rings 14 hat in etwa die gleiche Breite wie der Flansch 5. Der innenliegende Schenkel weist an seinem Ende einen sich radial nach innen erstreckenden umlaufenden Vorsprung 15. Der Ring 14 und der Vorsprung 15 sind so dimensioniert, daß der Vorsprung 15 in die Rastnut 10 einrasten kann, um die Führungshülse 4 an der Fensterscheibe 11 zu halten. Der außenliegende Schenkel des U-förmigen Rings 14 liegt mit einem oberen Ende an der Fensterscheibe 11 an, und hält diese gegen den Flansch 5. Zwischen der Fensterscheibe 11 und dem Flansch 5 ist ein Dichtgummi 20 vorgesehen. Es hat die Form einer flachen Lochscheibe. Die Breite entspricht in etwa der Breite des Flansches 5. Das Dichtgummi kann mit dem Flansch verklebt werden. Die Fensterscheibe 11 liegt auf dem Dichtgummi 20. Die Scheibe 11 wird somit zwischen dem Außenschenkel des Rings 14 und dem Flansch der Führungshülse 4 bzw. dem Dichtgummi 20 eingeklemmt. Auf diese Weise wird die Führungshülse 4 an der Fensterscheibe 11 befestigt.

Das Durchgangsloch 21 durch die Fensterscheibe 11 muß wesentlich größer sein im Durchmesser als der Durchmesser des Grundkörpers 4' der Führungshulse. Auf Grund von Bautoleranzen in der Karosserie kann weder die genaue Lage der Fensterscheibe 11 und damit des Durchgangsloches 21 noch die genaue Lage des Motorgehäuses 1 und damit der Gleithülse 2 bestimmt werden. Um entsprechende Toleranzen auszugleichen, muß das Durchgangsloch entsprechend groß dimensioniert sein.

Zwischen dem Ende der Gleithülse 2 und dem Vorsprung 6 an dem Grundkörper 4' sowie zwischen dem Motorgehäuse 1 und dem Flansch 5 der Führungshülse 4 ist jeweils ein Luftspalt 22 vorzusehen. Dieser ermöglicht es, daß das Motorgehäuse 1 in axialer Richtung relativ zur Führungshülse 4 beweglich ist.

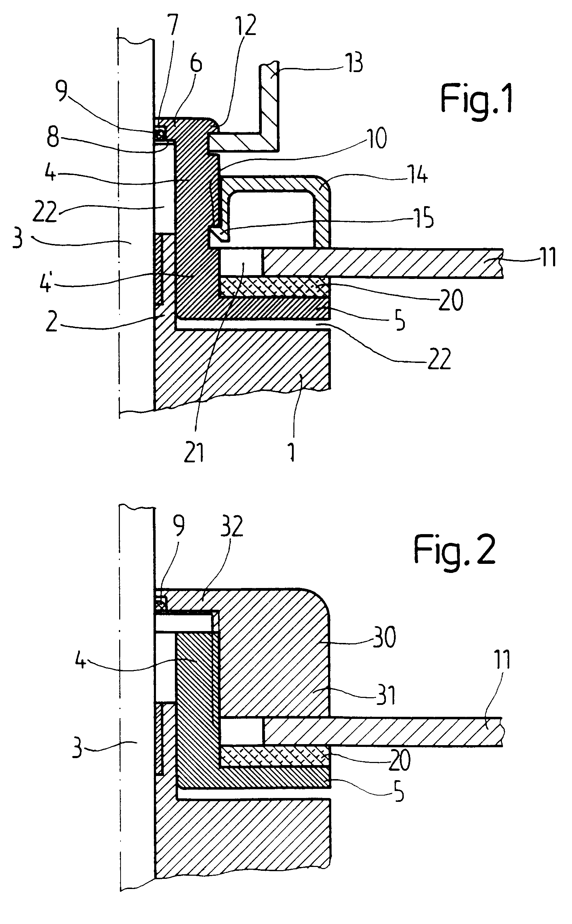

Die Anordnung gemäß Figur 1 wird wie folgt montiert. Zunächst wird der Dichtgummi 20 auf den Flansch 5 der Führungshülse 4 geklebt. Dann wird die Führungshülse 4 auf die Gleithülse 2 aufgeschoben. Danach wird das Motorgehäuse 1 an der Karosserie befestigt. Die Gleithülse 2 ragt in den leeren Rahmen der Karosserie, der zur Aufnahme der Fensterscheibe 11 vorgesehen ist. Danach wird die Fensterscheibe 11 eingesetzt, wobei die Gleithülse 2 und die Führungshülse 4 durch das Loch 21 in der Fensterscheibe 11 hindurchragt. Danach wird der Ring 14 aufgesetzt. Da die Führungshülse 4 noch direkt auf dem Motorgehäuse 1 aufliegt, muß sie angehoben werden, damit der Vorsprung 15 an dem Ring 14 in die Rastnut 10 im Grundkörper 5 einrasten kann. Dies geschieht mit Hilfe eines Werkzeuges 13, das in die Montagenut 12 eingesetzt wird. Danach wird das Werkzeug angezogen, wodurch sich die Führungshülse vom Motorgehäuse löst und die Rastnut 10 in eine Position gebracht wird, in der der Vorsprung 15 einrasten kann.

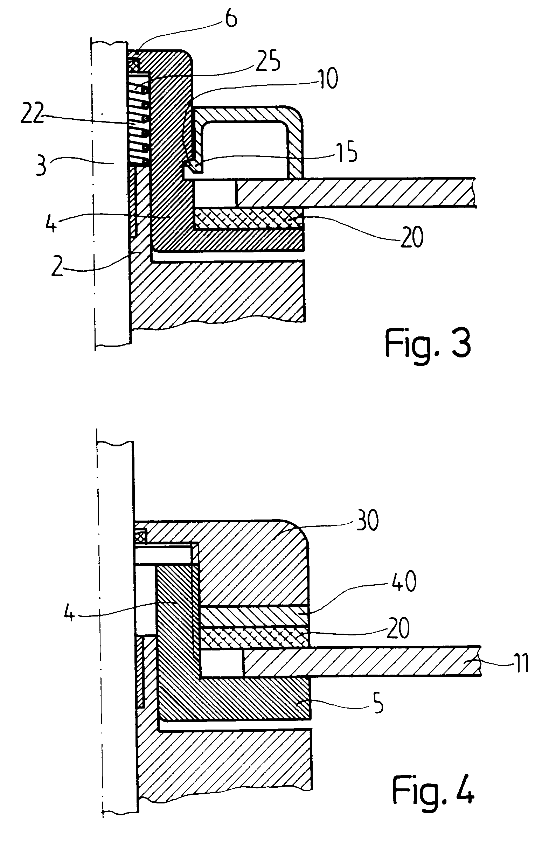

In der Figur 3 ist eine Alternative zu der Ausführung nach Figur 1 dargestellt. Der Unterschied besteht lediglich darin, daß koaxial zur Antriebswelle 3 eine Feder 25 vorgesehen ist, die sich einerseits an der Gleithülse 2 und andererseits am Vorsprung 6 abstützt. Diese drückt die Führungshülse 4 leicht nach oben, so daß der Luftspalt 22 entsteht. Bei der Montage der Scheibe wird diese auf den Dichtgummi 20 gelegt und heruntergedrückt. Dabei wird die Feder 25 komprimiert. Die Rastnut 10 befindet sich von vornherein in einer Position, in der der Vorsprung 15 einrasten kann. Es ist daher nicht notwendig, ein Werkzeug anzusetzen.

In der Figur 2 ist das Befestigungselement als Überwurfmutter 30 dargestellt. Die Überwurfmutter 30 besteht aus einem Schraubkörper 31 und einem sich radial nach innen erstreckenden Vorsprung 32, der ähnlich wie der Vorsprung 6 der Führungshülse 4 an die Antriebswelle 3 angelegt ist. Dieser Vorsprung 32 trägt den Dichtring 9, so daß auf einen entsprechenden Vorsprung an der Führungshülse verzichtet werden kann. Die Führungshülse weist an ihrem Außenrand ein Gewinde auf, auf das die Überwurfmutter 30 geschraubt wird. Die Überwurfmutter 30 wird so weit eingeschraubt, bis sich ihre Unterseite an die Fensterscheibe 11 anlegt. Auf diese Weise wird die Scheibe 11 zwischen dem Dichtgummi 20 bzw. dem Flansch 5 der Führungshülse 4 eingeklemmt und die Führungshülse 4 an der Fensterscheibe 11 befestigt.

Die Ausführungsform nach Figur 4 entspricht im wesentlichen der Ausführung nach Figur 2. Es ist ebenfalls eine Überwurfmutter 30 vorgesehen. Die Gummischeibe 20 befindet sich hier aber nicht zwischen dem Flansch 5 der Führungshülse 4 und der Fensterscheibe 11, sondern zwischen der Unterseite der Überwurfmutter 30 und der Fensterscheibe 11. Weiterhin ist eine Zwischenscheibe 40 vorgesehen, die zwischen dem Dichtgummi 20 und der Überwurfmutter 30 angeordnet ist. In der Regel ist die Zwischenscheibe 40 von gleichbleibender Dicke. Sie kann allerdings auch dazu benutzt werden, um Krümmungen in der Fensterscheibe 11 auszugleichen. Dann ist die Unterseite der Zwischenscheibe 40 entsprechend der Krümmung der Fensterscheibe 11 gegenüber der Oberseite der Zwischenscheibe 40 angeschrägt. Dies hat zur Folge, daß die Zwischenscheibe 40 mit ihrer Oberseite flächig an der Unterseite der Überwurfmutter 30 anliegt und gleichzeitig mit ihrer Unterseite sich im wesentlichen parallel zur gekrümmten Fläche der Fensterscheibe 11 erstreckt. Dies liefert einen guten, spannungsfreien Kontakt.

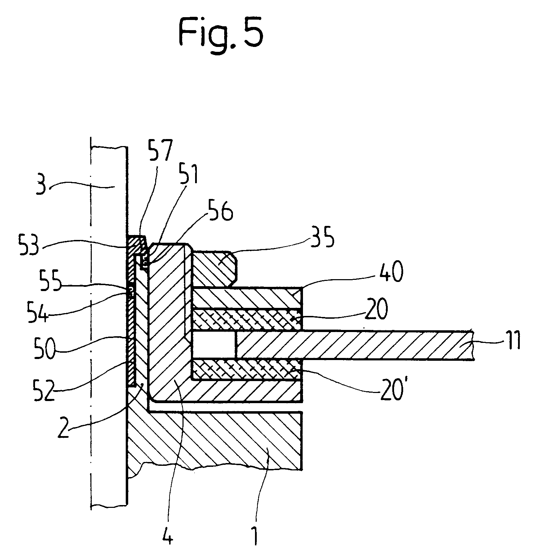

In Figur 5 ist eine besondere Antriebswellenabdichtung vorgesehen. Die Befestigung erfolgt mit einer normalen Mutter 35. Es ist weiterhin eine Zwischenscheibe und zwei Dichtgummis 20, 20' vorgesehen, nämlich eine unterhalb und eine oberhalb der Scheibe 11. Eine derartige Doppelanordnung kann natürlich auch in den Ausführungsformen nach Figur 2 und Figur 4 vorgesehen werden.

Die Dichtanordnung sieht wie folgt aus. Die Gleithülse 2 weist eine innenliegende Nut 50 auf, die sich nach oben hin öffnet. Die Nut erstreckt sich nahezu über die gesamte Länge der Gleithülse. Am Außenrand ist ebenfalls eine Nut 51 vorgesehen, die nach oben geöffnet ist und eine Länge aufweist, die ausreicht einen Dichtring aufzunehmen. In der Nut 50 befindet sich ein erstes Gleitstück 52. Ein weiteres Gleitstück 53 weist einen radialen nach außen weisenden Vorsprung 57 auf, der auf der Stirnfläche der Gleithülse 2 aufliegt und mit seinem Vorsprung 57 die Nut 51 abschließt. Zwischen dem ersten Gleitstück 52 und dem zweiten Gleitstück 53 ist ein Spalt 54. Ein erster Dichtring 55 befindet sich in diesem Spalt 54 zwischen dem ersten Gleitstück 52 und dem zweiten Gleitstück 53. Der Dichtring liegt an der Antriebswelle 3 an. Ein zweiter Dichtring 56 liegt in der außenliegenden Nut 51. Er liegt an der Führungshülse 4 an. Mit einer derartigen Doppeldichtung wird sicher verhindert, daß Wasser in das Motorgehäuse 1 oder in den Innenraum des Fahrzeuges eindringt.

Die Ausführungsformen nach den Figuren 2 bis 5 werden entsprechend der Ausführungsform nach Figur 1 montiert.

## Patentansprüche

1. Vorrichtung um eine Antriebswelle (3), die zum Antrieb eines Scheibenwischerarms vorgesehen ist, wasserdicht durch eine Fensterscheibe (11) eines Fahrzeuges zu führen mit den folgenden Merkmalen;
- An das Gehäuse (1) für den Antrieb schließt sich eine Gleithülse (2) an;
- diese ist koaxial zur Antriebswelle (3) ausgerichtet und wird von dieser durchdrungen;
- die Gleithülse (2) ist in einer Führungshülse (4) geführt, wobei der Außendurchmesser der Gleithülse (2) im wesentlichen dem Innendurchmesser der Führungshülse (4) entspricht, dadurch **gekennzeichnet,** daß die Führungshülse (4) einen radial nach außen weisenden Flansch (5) aufweist, der sich zwischen dem Gehäuse (1) und der Fensterscheibe (11) befindet, und in einem Loch in der Fensterscheibe befestigt ist, so daß die Gleithülse (2) und die Führungshülse (4) gegeneinander in axialer Richtung verschiebbar sind.

2. Vorrichtung nach Anspruch 1, dadurch **gekennzeichnet**, daß die Vorrichtung eine Befestigungseinheit (14, 30, 35) aufweist, die mit der Führungshülse (4) verbindbar ist und an der dem Flansch (5) gegenüberliegenden Seite der Fensterscheibe (11) abgestützt ist.

3. Vorrichtung nach Anspruch 2, dadurch **gekennzeichnet**, daß die Befestigungseinheit (14) einen sich radial nach innen erstreckenden umlaufenden Vorsprung (15) aufweist, der in einem an der Außenfläche der Führungshülse (4) verlaufende Rastnut (10) eingreift.

4. Vorrichtung nach Anspruch 2 oder 3, dadurch **gekennzeichnet**, daß die Befestigungseinheit ein Ring (14) ist, der im Schnitt U-förmig ist.

5. Vorrichtung nach Anspruch 3 und 4, dadurch **gekennzeichnet**, daß der Vorsprung (15) am oberen Ende des Innenschenkels des Ringes (14) angeformt ist.

6. Vorrichtung nach Anspruch 1, dadurch **gekennzeichnet**, daß die Führungshülse (4) einen sich radial nach innen erstreckenden Vorsprung (6) aufweist, der an der Antriebswelle (3) anliegt und einen Dichtring (9) trägt.

7. Vorrichtung nach Anspruch 2, dadurch **gekennzeichnet**, daß die Befestigungseinheit (30) einen radial sich nach innen erstreckenden Vorsprung (32) aufweist, der an der Antriebswelle (3) anliegt und einen Dichtring (9) trägt.

8. Vorrichtung nach Anspruch 1, dadurch **gekennzeichnet**, daß die Gleithülse (2) an ihrer Innenfläche eine nach oben offene Nut (50) aufweist, die sich nahezu über die gesamte Länge der Gleithülse (2) erstreckt, daß die Gleithülse (2) an der Außenfläche eine nach oben offene Nut (51) aufweist, die gerade so lang ist, um einen Dichtring aufzunehmen, daß im unteren Teil der innenliegenden Nut (50) ein erstes Gleitstück (52) eingesetzt ist, daß im oberen Teil der innenliegenden Nut (50) ein zweites Gleitstück (53) eingesetzt ist, das einen radial nach außen weisenden Vorsprung (57) aufweist, der sich über die Stirnseite der Gleithülse (2) erstreckt und die äußere Nut (51) abschließt, daß zwischen dem ersten Gleitstück (52) und dem zweiten Gleitstück (53) ein Luftspalt (54) besteht, daß im Luftspalt (54) eine erste Dichtung (55) und daß in der außenliegenden Nut eine zweite Dichtung (56) eingesetzt ist.

9. Vorrichtung nach Anspruch 3, dadurch **gekennzeichnet**, daß am oberen Ende der Führungshülse (4) eine Montagenut (12) vorgesehen ist, in die ein Montagewerkzeug (13) eingreifen kann.

10. Vorrichtung nach Anspruch 3, dadurch **gekennzeichnet**, daß eine Feder (25) zwischen der oberen Stirnseite der Gleithülse (2) und dem Vorsprung (6) der Führungshülse (4) abgestützt ist und koaxial zur Antriebswelle (3) angeordnet ist.

11. Vorrichtung nach Anspruch 1, dadurch **gekennzeichnet**, daß eine Gummischeibe (20) zwischen der Fensterscheibe (11) und dem Flansch (5) der Führungshülse angeordnet ist.

12. Vorrichtung nach Anspruch 2, dadurch **gekennzeichnet**, daß eine Gummischeibe (20) zwischen der Befestigungseinheit und der Fensterscheibe (11) angeordnet ist.

13. Vorrichtung nach Anspruch 12, dadurch **gekennzeichnet**, daß zwischen der Befestigungseinhelt (30) und der Fensterscheibe (11) eine Zwischenscheibe (40) vorgesehen ist.

14. Vorrichtung nach Anspruch 1, dadurch **gekennzeichnet**, daß das Motorgehäuse (1) an mindestens zwei Punkten vorzugsweise drei Punkten an der Karosserie des Fahrzeuges befestigt ist.

15. Verfahren zur Montage eines Motors mit einer Antriebswelle (3), die durch eine Fahrzeugscheibe (11) hindurchragen soll, und einer Fensterscheibe (11) mit den folgenden Schritten:
- Das Motorgehäuse (1) wird an der Karosserie befestigt,
- auf die Gleithülse (2) wird eine Führungshülse (4) aufgeschoben,
- die Fensterscheibe (11) wird in den vorgesehenen Rahmen in der Karosserie eingesetzt,
- die Führungshülse (4) wird mittels einer Befestigungseinheit (14, 30) an der Fensterscheibe befestigt.

## Claims

1. Device around a drive shaft (3) provided to drive a windscreen wiper arm which leads the shaft through a vehicle windscreen (11) in watertight fashion with the following features:
- A sliding sleeve (2) connects with the drive housing (1);
- this is ordered co-axial to the drive shaft (3) and is penetrated by the same;
- the sliding sleeve (2) is arranged in a guide sleeve (4), whereby the outer diameter of the sliding sleeve (2) is basically the inner diameter of the guide sleeve (4), thereby characterised in that the guide sleeve (4) has a flange (5) extending radially outwards which is located between the housing (1) and the windscreen (11) and is fastened in a hole in the windscreen, so that the sliding sleeve (2) and the guide sleeve (4) can move against each other in the axial direction.

2. Device according to claim 11 thereby characterised in that the device has a fixing unit (14, 30, 35) which can be connected to the guide sleeve (4) and which is supported by the flange (5) on the opposite side of the windscreen (11).

3. Device according to claim 2, thereby characterised in that the fixing unit (14) has a circulatory projection (15) extending radially inwards which latches into a latching groove (10) running around the outside of the guide sleeve (4).

4. Device according to claim 2 or 3, thereby characterised in that the fixing unit is a ring (14) which has a U-shaped cross-section.

5. Device according to claims 3 and 4, thereby characterised in that the projection (15) is formed at the top of the inner leg of the ring (14).

6. Device according to claim 1, thereby characterised in that the guide sleeve (4) has a projection (6) extending radially inwards which lies up against the drive shaft (3) and supports a sealing ring (9).

7. Device according to claim 2, thereby characterised in that the fixing unit (30) has a projection (32) extending radially inwards which lies up against the drive shaft (3) and supports a sealing ring (9).

8. Device according to claim 1, thereby characterised in that the interior surface of the sliding sleeve (2) has a groove (50) which runs along nearly the complete length of the sliding sleeve (2), in that the exterior surface of the sliding sleeve (2) has a groove (51) which is open upwards and exactly long enough to support a sealing ring, in that a first sliding piece (52) is inserted in the upper part of the interior groove (50), in that the lower part of the interior groove (50) has a second sliding piece (53) inserted which has a projection (57) extending radially outwards and which runs over the head face of the sliding sleeve (2) and connects to the exterior groove (51), in that a clearance (54) is created between the first sliding piece (52) and the second sliding piece (53), in that a first seal (55) is inserted in the clearance (54) and second seal (56) in the exterior groove.

9. Device according to claim 3, thereby characterised in that the top of the guide sleeve (4) is provided with an installation groove (12) to give an installation tool (13) something to grip on.

10. Device according to claim 3, thereby characterised in that a spring (25) is borne between the upper head face of the sliding sleeve (2) and the projection (6) of the guide sleeve (4) and is arranged co-axial to the drive shaft (3).

11. Device according to claim 1, thereby characterised in that a rubber washer (20) is arranged between the windscreen (11) and the flange (5) of the guide sleeve.

12. Device according to claim 2, thereby characterised in that a rubber washer (20) is arranged between the fixing unit and the windscreen (11.

13. Device according to claim 12, thereby characterised in that an intermediate washer is provided between the fixing unit (30) and the windscreen (11).

14. Device according to claim 1, thereby characterised in that the motor housing (1) is fastened to the vehicle bodywork at two points at least but preferably three points.

15. Process to install a windscreen (11) and a motor with a drive shaft (3) which is intended to protrude through a vehicle windscreen (11) by the following steps:
- The motor housing (1) is fastened to the vehicle bodywork,
- a guide sleeve (4) is installed over the sliding sleeve (2),
- the windscreen (11) is mounted in the frame provided in the bodywork,
- the guide sleeve (4) is fastened to the windscreen by means of a fixing unit (14, 30).

## Revendications

1. Dispostif permettant de guider un arbre d'entraînement (3), qui est prévu pour l'entraînement d'un bras d'essuie-glace, afin qu'il traverse d'une manière étanche à l'eau une glace de fenêtre (11) d'un véhicule, comportant les particularités suivantes :
- un manchon de glissement (2) se raccorde au boîtier (1) prévu pour l'entraînement,
- ce manchon de glissement (2) est orienté coaxialement à l'arbre d'entraînement (3) et est traversé par celui-ci et
- le manchon de glissement (2) est guidé dans un manchon de traversée (4), le diamètre extérieur du manchon de glissement (2) étant essentiellement égal au diamètre intérieur du manchon de traversée (4),
caractérisé en ce que le manchon de traversée (4) comporte une collerette (5), dirigée radialement vers l'extérieur et située entre le boîtier (1) et la glace de fenêtre (11), et est fixé dans un trou ménagé dans la glace de fenêtre, de façon telle que le manchon de glissement (2) et le manchon de traversée (4) puissent glisser l'un par rapport à l'autre suivant la direction axiale.

2. Dispositif suivant la revendication 1, caractérisé en ce que le dispositif comprend une unité de fixation (14, 30, 35) qui peut être rendue solidaire du manchon de traversée (4) et est en appui sur la face de la glace de fenêtre (11) opposée à la collerette (5).

3. Dispositif suivant la revendication 2, caractérisé en ce que l'unité de fixation (14) comporte une partie en saillie (15) qui fait tout le tour, est dirigée radialement vers l'intérieur et s'accroche dans une gorge d'enclenchement (10) s'étendant sur la surface extérieure du manchon de traversée (4).

4. Dispositif suivant la revendication 2 ou 3, caractérisé en ce que l'unité de fixation est un anneau (14) qui est en forme de U en coupe.

5. Dispositif suivant la revendication 3 ou 4, caractérisé en ce que la partie en saillie (15) est réalisée au formage à l'extrémité supérieure de la branche intérieure de l'anneau (14).

6. Dispositif suivant la revendication 1, caractérisé en ce que le manchon de traversée (4) comporte une partie en saillie (6) qui est dirigée radialement vers l'intérieur, prend appui sur l'arbre d'entraînement (3) et porte une bague d'étanchéité (9).

7. Dispositif suivant la revendication 2, caractérisé en ce que l'unité de fixation (30) comporte une partie en saillie (32) qui est dirigée radialement vers l'intérieur, prend appui sur l'arbre d'entraînement (3) et porte une bague d'étanchéité (9).

8. Dispositif suivant la revendication 1, caractérisé en ce que le manchon de glissement (2) comporte, sur sa surface intérieure, une gorge (50) ouverte vers le haut et s'étendant sur presque toute la longueur du manchon de glissement (2), en ce que le manchon de glissement (2) comporte, sur sa surface extérieure, une gorge (51) ouverte vers le haut qui est juste assez longue pour recevoir une bague d'étanchéité, en ce qu'une première pièce de glissement (52) est placée dans la partie inférieure de la gorge intérieure (50), en ce qu'une seconde pièce de glissement (53) est placée dans la partie supérieure de la gorge intérieure (50), la seconde pièce de glissement (53) comportant une partie en saillie (57) qui est dirigée radialement vers l'extérieur, s'étend au-dessus de la tranche du manchon de glissement (2) et ferme la gorge extérieure (51), en ce qu'un intervalle libre (54) existe entre la première pièce de glissement (52) et la seconde pièce de glissement (53) et en ce qu'une première garniture d'étanchéité (55) est placée dans l'intervalle d'air (54) et une seconde garniture d'étanchéité (56) dans la gorge extérieure.

9. Dispositif suivant la revendication 3, caractérisé en ce qu'à l'extrémité supérieure du manchon de traversée (4), il est prévu une gorge de montage (12) dans laquelle un outil de montage (13) peut s'accrocher.

10. Dispositif suivant la revendication 3, caractérisé en ce qu'un ressort (25) prend appui entre la tranche supérieure du manchon de glissement (2) et la partie en saillie (6) du manchon de traversée (4) et est disposé coaxialement à l'arbre d'entraînement (3).

11. Dispositif suivant la revendication 1, caractérisé en ce qu'une rondelle en caoutchouc (20) est disposée entre la glace de fenêtre (11) et la collerette (5) du manchon de traversée.

12. Dispositif suivant la revendication 2, caractérisé en ce qu'une rondelle en caoutchouc (20) est disposée entre l'unité de fixation et la glace de fenêtre (11).

13. Dispositif suivant la revendication 12, caractérisé en ce qu'une rondelle intermédiaire (40) est prévue entre l'unité de fixation (30) et la glace de fenêtre (11).

14. Dispositif suivant la revendication 1, caractérisé en ce que le boîtier de moteur (1) est fixé en au moins deux points, de préférence trois points, sur la carrosserie du véhicule.

15. Procédé de montage d'un moteur, comportant un arbre d'entraînement (3) qui doit traverser une glace de véhicule (11), et d'une glace de fenêtre (11), comportant les opérations suivantes :
- le boîtier de moteur (1) est fixé sur la carrosserie,
- un manchon de traversée (4) est enfilé sur le manchon de glissement (2),
- la glace de fenêtre (11) est posée dans l'encadrement prévu ménagé dans la carrosserie et
- le manchon de traversée (4) est fixé sur la glace de fenêtre au moyen d'une unité de fixation (14, 30).
